# EUROPÄISCHE PATENTSCHRIFT

(11) **EP 2 232 112 B1**
(45) Veröffentlichungstag und Bekanntmachung des Hinweises auf die Patenterteilung: **03.08.2011**
(21) Anmeldenummer: 08863643.6
(22) Anmeldetag: 19.12.2008
(51) Int. Cl.: F16K 5/06

(54) **VENTIL**
VALVE
SOUPAPE

(30) Priorität: 20.12.2007 DE 202007017968 U; 27.08.2008 DE 202008011406 U
(43) Veröffentlichungstag der Anmeldung: 29.09.2010
(73) Patentinhaber: Xomox International GmbH & Co., 88131 Lindau (DE)
(72) Erfinder: WETZEL, Winfried, 88138 Hergensweiler (DE); WEIL, Jochen, 88131 Bodolz (DE); DAVIDSON, James William, Mason, Ohio 45040 (US); FUOC, Alain, 68110 Illzach (FR); VORTKAMP, James E., Cincinnati, Ohio 45230 (US)
(74) Vertreter: Schmitt, Meinrad
(86) Internationale Anmeldenummer: PCT/EP2008/010963
(87) Internationale Veröffentlichungsnummer: WO 2009/080329

(56) Entgegenhaltungen:
- DE-A1- 4 104 003
- US-A- 6 129 336
- US-A1- 2005 104 026

## Beschreibung

Die Erfindung bezieht sich auf ein Ventil mit einem Gehäuse und einem in diesem drehbar angeordneten, vorzugsweise kugelförmigen Drehkörper gemäß den im Oberbegriff des Patentanspruchs 1 angegebenen Merkmalen.

Aus der EP 1 047 894 B1 ist ein derartiges als Kugelhahn ausgebildetes Ventil bekannt, mit dessen kugelförmigem Drehkörper eine separat ausgebildete Welle in Wirkverbindung steht. Der Drehkörper enthält einen Durchgang für ein Strömungsmedium, und das Gehäuse enthält im Inneren zwei in Strömungsrichtung beabstandet angeordnete Sitzringe, welche an der sphärischen Außenfläche des Drehkörpers dichtend anliegen. Die Welle greift mit einem rechteckförmigen Teil in eine korrespondierend ausgebildete Aufnahme des Drehkörpers ein und ist durch eine Durchführung des Gehäuses hindurch nach außen geführt, damit beispielsweise mittels eines Hebels oder dergleichen der Drehkörper in die gewünschte Position zum Absperren oder zumindest teilweise Freigeben des Strömungswegs gedreht werden kann. Aufgrund der zweiteiligen Ausbildung von Drehkörper und Welle wird in der Absperrposition der schwimmend angeordnete Drehkörper aufgrund der Druckdifferenz verstärkt an den stromabwärts angeordneten Stützring gedrückt. Durch die zweiteilige Ausbildung von Drehkörper und Welle sollen durch das Strömungsmedium bzw. durch Druckunterschiede bedingte Bewegungen des Drehkörpers von der Welle fern gehalten werden. Die Welle enthält im Bereich der Gehäusedurchführung einen Teil mit einer sphärischen Außenfläche, an welcher ein im Gehäuse angeordnetes Dichtelement derart anliegt, dass die Dichtwirkung durch den im Gehäuseinneren vorherrschenden Druck des Strömungsmediums verstärkt und die sogenannte externe Abdichtung verbessert wird. Mit der sphärischen Außenfläche des genannten Wellenteils soll erreicht werden, dass die externe Abdichtung infolge von axialen Bewegungen der Welle sowie von außen, beispielsweise mittels des erwähnten Hebels eingeleiteten Schwenkbewegungen, nicht nachteilig beeinflusst wird. Es sei festgehalten, dass aufgrund der zweiteiligen Ausbildung von Drehkörper und Welle auf letztere praktisch keine oder allenfalls vernachlässigbare Schwenkbewegungen ausgeübt werden.

Ferner ist aus der DE 30 23 230 A1 ein gleichfalls als Kugelhahn ausgebildetes Ventil bekannt, dessen Drehkörper und Welle einteilig ausgebildet sind. Die inneren Flächen des Gehäuses, welche den kugelförmigen Drehkörper und die Welle aufnehmen, sind mit einer gemeinsamen Auskleidung oder Beschichtung aus Kunststoff versehen. Auch die Außenflächen des Drehkörpers und der einteilig mit diesem ausgebildeten Welle sind mit einer Beschichtung oder Auskleidung aus Kunststoff versehen. In der Gehäusedurchführung für die Welle ist zwecks Abdichtung eine Stopfbuchsendichtung angeordnet. Durch das Strömungsmedium oder durch Druckunterschiede, insbesondere in der Absperrposition des Drehkörpers, werden aufgrund der einteiligen Ausbildung Kräfte unmittelbar auf die Welle übertragen mit der Folge, dass zwischen der Wellenauskleidung und der Stopfbuchse lokale Belastungsspitzen und recht höhe Flächenpressungen auftreten, welche die Standzeit oder Lebensdauer verkürzen bzw. schon nach vergleichsweise kurzer Gebrauchsdauer zu erhöhten Leckraten führen können.

Weiterhin ist aus der EP 0 809 059 B1 ein Ventil bekannt, dessen Gehäuse innen mit einer Kunststoff-Auskleidung versehen ist und dessen Drehkörper und Welle gleichfalls eine Auskleidung bzw. Beschichtung aus Kunststoff aufweisen. Der Drehkörper ist im Gehäuse schwimmend mittels in Strömungsrichtung beabstandet angeordneten Stützringen gelagert. Die zumindest im Inneren des Gehäuses mit der genannten Auskleidung bzw. Beschichtung versehene Welle greift mit ihrem inneren Ende in eine korresponierend ausgebildete und mit Kunststoff ausgekleidete Ausnehmung des Drehkörpers ein und zwar derart, dass über die Welle der Drehkörper zum Absperren oder Freigeben des Strömungsweges drehbar ist. Damit axiale Bewegungen, insbesondere aufgrund von Druckdifferenzen oder Druckschwankungen des Strömungsmediums nicht auf die Welle übertragen werden, ist ein hinreichendes Spiel zwischen der genannten Ausnehmung des schwimmend gelagerten Drehkörpers und dem eingreifenden Wellenende erforderlich. Die Fertigung und Herstellung der genannten Verbindung erfordert einen nicht unerheblichen Aufwand. Ferner sind eine Hysterese und/oder Stellungsunterschiede zwischen der Drehwinkelstellung der Welle und der Drehwinkelstellung des Drehkörpers zu beachten, welche insbesondere bei Ausbildung als Regelventil und/oder in automatisierten Systemen nachteilig sind, in welchen für die Drehung der Welle und letztendlich des Drehkörpers geeignete Antriebe vorgesehen sind. Im Bereich der Wellendurchführung ist eine besondere doppelte Abdichtung vorgesehen, welche ein nicht unerhebliches Bauvolumen sowie einen entsprechend hohen Fertigungs- und Montageaufwand erfordert.

In der DE 41 04 003 A1 ist die Ausführung einer Schaltarmatur in Form eines Kugelhahns beschrieben. In die Kugel ist eine drehbare, durch eine Bohrung durch das Armaturengehäuse verlaufende Schaltwelle eingesteckt, die einen radialen Bund mit einer inneren und einer äußeren Dichtfläche mit jeweils sphärischer Kontur aufweist Die innere Dichtfläche stützt sich auf einem inneren Dichtring und die äußere Dichtfläche auf einem äußeren Dichtring ab, wobei die Dichtringe mittels eines federbeaufschlagten Druckrings gegen die Dichtflächen gepresst werden. Aufgrund zwischen der Schaltwelle, dem Druckring und einem Ringflansch ausgebildeter Ringspalte ist eine begrenzte Kippbarkeit der sphärisch gelagerten Schaltwelle im Armaturengehäuse ermöglicht.

In der US 2005/0104026 A1 wird ein Kugelventil offenbart, dessen kugelförmiger Drehkörper und Drehwelle einteilig ausgeführt sind. Die Abdichtung erfolgt zum einen durch an dem Drehkörper anliegende und sich gegen das Gehäuse abstützende Sitzringe und zum anderen durch die Drehwelle umschließende Dichtungen.

Hiervon ausgehend liegt der Erfindung die Aufgabe zugrunde, das Ventil mit einem geringen konstruktiven Aufwand dahingehend weiter zu bilden, dass die aufgezeigten Nachteile vermieden werden und eine hohe Standzeit bzw. lange Lebensdauer erreicht wird. Ferner soll das Ventil im Hinblick auf eine Minimierung, vor allem der externen Leckraten optimiert werden. Das Ventil soll für aggressive Medien ausgelegt sein, und/oder Schäden infolge von korrosiven Wirkungen des Strömungsmediums und/oder externer Einflüsse, wie Feuchtigkeit der Umgebung, sollen vermieden werden. Des Weiteren sollen nachteilige Einflüsse auf die Abdichtung der Welle vermieden werden. Auch soll das Ventil speziell in Hochdruck- und/oder Hochtemperatureinsatz eine funktionssichere und/oder optimierte Abdichtung gewährleisten und/oder letztere mit erhöhter Standzeit ermöglichen.

Die Lösung dieser Aufgabe erfolgt gemäß den im Patentanspruch 1 angegebenen Merkmalen.

Das erfindungsgemäße Ventil zeichnet sich durch eine einfache und gleichwohl funktionssichere Konstruktion aus, wobei der Drehkörper und die Welle fest miteinander verbunden und insbesondere einteilig ausgebildet sind. Die Welle enthält im Bereich der Durchführung einen Teil mit einer sphärischen Außenfläche, wobei der genannte Wellenteil von einem Stützring umgeben ist, welcher eine mit der sphärischen Außenfläche des Wellenteils zumindest näherungsweise korrespondierende sphärische Innenfläche aufweist. Die sphärische Außenfläche des Wellenteils liegt an der sphärischen Innenfläche des Stützrings an, wodurch eine Schwenklagerung um Schwenkachsen geschaffen ist, deren Zentrum durch den Mittelpunkt und/oder das Zentrum der genannten sphärischen Flächen vorgegeben ist und/oder zumindest näherungsweise auf der gemeinsamen Drehachse der Welle und des Drehkörpers liegt. Ferner ist im Ringspalt der Durchführung zwischen der Welle und dem Gehäuse ein ringförmiges Dichtelement angeordnet, welches in bevorzugter Weise einen X-förmigen Querschnitt aufweist und/oder im Bereich der genannten sphärischen Außenflächen einen bevorzugt ringförmigen Teil oder Stützring mit erhöhter Steifigkeit aufweist. Somit bildet das Dichtelement in Kombination mit dem Stützring und ferner mit dem sphärischen Teil der Welle eine Lagerung der Welle zusammen mit dem Drehkörper um Achsen, welche zumindest näherungsweise orthogonal zur gemeinsamen Drehachse von Drehkörper und Welle verlaufen. Erfindungsgemäß ist trotz fester Verbindung der Welle mit dem Drehkörper dieser schwimmend im Gehäuse gelagert, wobei gleichwohl eine sichere externe Abdichtung erfolgt. Es sei festgehalten, dass aufgrund von Druckänderungen oder Differenzdrücken, insbesondere in der Absperrposition, der Drehkörper Mikrobewegungen im Wesentlichen in Richtung der Gehäuselängsachse ausführt, wobei derartige Mikrobewegungen in der Größenordnung bis zu einigen hundert Mikrometern betragen können. Aufgrund der sphärischen Ausbildung der Welle und korrespondierend hierzu des Stützrings, der insbesondere in das Dichtelement integriert ist, wird mit hoher Sicherheit die Abdichtung in der Durchführung erreicht und eine unerwünschte externe Leckage unterbunden. Die innere Abdichtung des Ventils wird mittels der im Gehäuse festgelegten Sitzringe auch und gerade bei den erläuterten Mikrobewegungen, insbesondere Schwenkbewegungen, erreicht. Das erfindungsgemäße Ventil enthält somit eine nachstellbare und/oder selbstnachstellende Wellenabdichtung der mit dem Drehkörper fest verbundenen und bevorzugt einstückig ausgebildeten Welle. Durch die Kombination einerseits der Sitzringe, mittels welchen die Auslenkungen und/oder Bewegungen des Drehkörpers mit zunehmender Druckbelastung in vorteilhafter Weise begrenzt und/oder reduziert werden, und andererseits des insbesondere in das Dichtelement integrierten Stützringes im Bereich des Wellenteils und dessen sphärischer Innenfläche wird erfindungsgemäß eine erheblich verbesserte und/oder optimierte Abdichtung der Wellendurchführung erreicht.

In einer bevorzugten Weiterbildung sind der Drehkörper und die mit diesem fest verbundene Welle mit einer gemeinsamen Auskleidung aus Kunststoff, insbesondere Fluorkunststoffe, wie PTFE, FEP, PFA oder TFA aufweisen. Ferner ist das Gehäuse einschließlich der Wellendurchführung innen mit einer derartigen Kunststoffauskleidung versehen. Hierbei weist im Bereich der Durchführung die Kunststoffauskleidung der Welle die vorgenannte sphärische Außenfläche auf, welche an der sphärischen Innenfläche des Stützrings anliegt. Radial außen liegt der Stützring in vorteilhafter Weise an der Auskleidung des Gehäuses im Bereich der Durchführung an. Somit gelten die oben erläuterten Wirkungszusammenhänge auch für Ventile, deren Gehäuse ebenso wie die Welle samt Drehkörper Kunststoffauskleidungen aufweisen.

Das Dichtelement enthält in bevorzugter Weise wenigstens eine dynamische Dichtlippe, vorteilhaft zwei dynamische Dichtlippen, welche zumindest teilweise an der sphärischen Außenfläche des genannten Wellenteils oder der an diesem vorhandenen Kunststoffauskleidung anliegen. Insbesondere weist die anliegende Innenfläche der flexiblen Dichtlippe zwei unter einem stumpfen Winkel angeordnete und bevorzugt im Wesentlichen konische oder sphärische Teilflächen auf, wobei vorteilhaft im unbelasteten Zustand im Bereich der Schnittlinie der beiden genannten Teilflächen die Anlage an der sphärischen Außenfläche erfolgt und/oder die Schnittlinie der Teilfläche sich innerhalb der Anlagefläche befindet. Bei zunehmender Belastung und/oder infolge der genannten Mikrobewegungen des Drehkörpers und der hierbei erfolgenden Schwenkung der Welle erfolgt eine Verlagerung der Anlagefläche in Richtung der Drehachse, wobei die Anlagefläche sich in vorteilhafter Weise vergrößert und/oder die Anlagefläche in den steiferen und/oder ausgesteiften Teil des Dichtelements verlagert wird, wodurch in vorteilhafter Weise die Abstützung der Welle verstärkt und/oder verbessert wird. Des Weiteren enthalten im Rahmen der Erfindung die bevorzugt V-förmig ausgebildeten Sitzringe flexible Dichtlippen mit zwei, unter einem stumpfen Winkel angeordneten und bevorzugt im Wesentlichen konischen oder sphärischen Teilflächen, und zwar insbesondere derart, dass im unbelasteten Zustand im Bereich deren Schnittlinie die Auflage auf der sphärischen Außenfläche des Drehkörpers oder dessen Auskleidung erfolgt und ferner bei Belastung die Auflagefläche der Dichtlippe in einen Bereich mit erhöhter Steifigkeit derart verlagert, dass bei erhöhten Belastungen und/oder größeren Bewegungen der Drehkörper auf dem genannten Bereich abgestützt wird.

Besondere Weiterbildungen und Ausgestaltungen der Erfindung sind in der nachfolgenden Beschreibung von Ausführungsbeispielen und in den Unteransprüchen angegeben. Die Ausführungsbeispiele betreffen Ventile mit einem als Kugel ausgebildeten Drehkörper bzw. die Ausbildung als Kugelhahn, doch sei ausdrücklich festgehalten, dass die Erfindung darüber hinaus Ventile mit anderen Drehkörpern, wie konische Küken oder Klappen, umfasst. Unabhängig von der jeweiligen Ausgestaltung des Ventils, sei es als Kugelhahn, Kükenhahn, Klappenventil oder dergleichen, kommt es maßgebend auf die feste und bevorzugt einstückige Ausbildung von Welle und Drehkörper an in Kombination mit der Schwenkbarkeit im Bereich der Wellendurchführung um Achsen, welche zur Drehachse im Wesentlichen orthogonal verlaufen.

Die Erfindung wird nachfolgend an Hand der in der Zeichnung dargestellten besonderen Ausführungsbeispiele näher erläutert, ohne dass insoweit eine Beschränkung erfolgt. Es zeigen in schematischen Darstellungen:
- Fig. 1: einen axialen Schnitt eines als Kugelhahn ausgebildeten und eine Kunst- stoffauskleidung aufweisenden Ventils, wobei dem sphärischen Teil der einteilig mit dem Drehkörper ausgebildeten Welle ein X-förmiges Dicht- element mit integriertem Stützring zugeordnet ist,
- Fig. 2: einen axialen Schnitt eines weiteren Ausführungsbeispiels des Kugel- hahns,
- Fig. 3: eine Prinzipdarstellung der Welle samt kugelförmigem Drehkörper in der Absperrposition,
- Fig. 4: einen axialen Schnitt eines Ausführungsbeispiels des Ventils ohne Kunst- stoffauskleidung,
- Fig. 5: perspektivisch und teilweise geschnitten das Dichtelement mit integriertem Stützring,
- Fig. 6: teilweise und geschnitten das Dichtelement gemäß Fig. 5,
- Fig. 7 - 14: teilweise axiale Schnitte und Ansichten weiterer Ausführungsbeispiele.

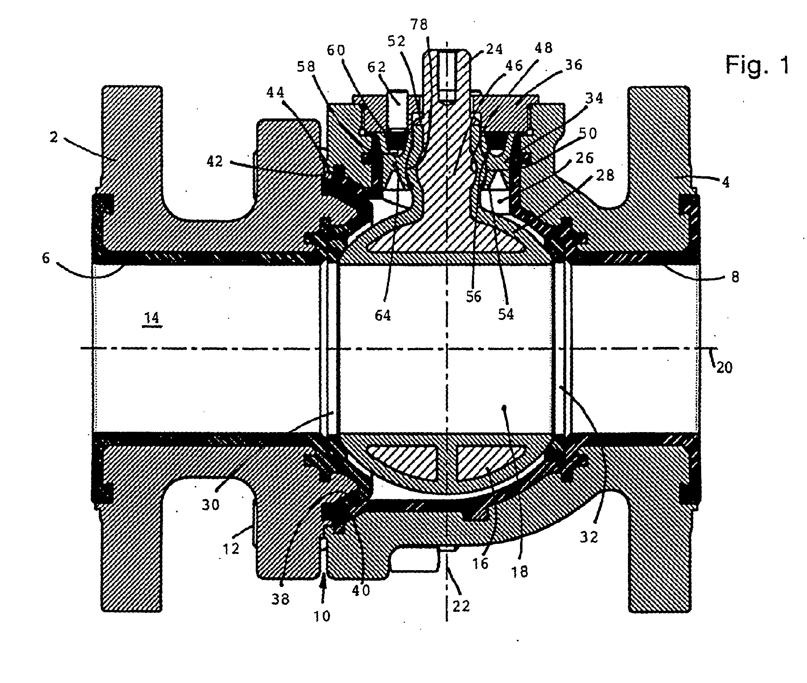

Gemäß Fig. 1 enthält das als Kugelhahn ausgebildete Ventil ein bevorzugt aus Metall bestehendes Gehäuse mit zwei Gehäuseteilen 2, 4, welche innen mit Kunststoff-Auskleidungen 6, 8 ausgekleidet sind. Die Gehäuseteile 2, 4 sind in einem Verbindungsbereich 10 nach Art einer Flanschverbindung mittels Schrauben 12 miteinander verbunden. Die Auskleidungen 6, 8 begrenzen den im Inneren des Gehäuses befindlichen Strömungskanal 14 für ein Strömungsmedium, und ferner ist im Inneren des Gehäuses ein kugelförmiger Drehkörper 16 angeordnet, welcher eine Durchgangsöffnung 18 enthält und um eine zur Längsachse 20 des Gehäuses orthogonale Drehachse 22 drehbar ist. In der dargestellten Offenposition kann das Strömungsmedium frei durch die Durchgangsöffnung 18 und somit das Ventil strömen. Nach einer Drehung des Drehkörpers 16 um 90° bezogen auf die Drehachse 22 nimmt der Drehkörper 16 zum Absperren des Strömungswegs seine Absperrposition ein.

Mit dem Drehkörper 16 ist eine Welle 24 fest verbunden, wobei der Drehkörper 16 und die Welle 24 bevorzugt einteilig ausgebildet sind. Die Welle 24 durchdringt eine Durchführung 26 des Gehäuseteils 4 nach außen, wobei an dem außen liegenden freien Ende der Welle 24 ein geeignetes Betätigungselement, wie Hebel, Handrad oder beispielsweise elektrischer Drehantrieb ankoppelbar ist, um den Drehkörper 16 in die gewünschte Position zu drehen. Der Drehkörper 16 und die Welle 24 sind mit einer gemeinsamen Auskleidung bzw. Umhüllung 28 umgeben, wobei auch innerhalb des Drehkörpers 16 in der Durchgangsöffnung 18 diese Auskleidung vorhanden ist. Der Drehkörper 16 ist mittels zwei in Richtung der Längsachse 20 beabstandet zueinander und in den Auskleidung 6, 8 festgelegten Sitzringen 30, 32 derart abgestützt, dass in der Absperrposition des Drehkörpers 16 die innere Abdichtung des Kugelhahns sicher gestellt ist. Im Bereich der Durchführung 26 ist ferner ein ringförmiges Dichtelement 34 aus elastomerem und/oder elastischem Material, insbesondere Kunststoff, mit X-förmigem Querschnitt angeordnet und mittels eines Deckels 36 festgelegt, welcher mit dem Gehäuseteil 4 mittels hier nicht dargestellten Schrauben oder dergleichen bevorzugt lösbar verbunden ist.

Es ist von besonderer Bedeutung, dass die Auskleidungen 6 bzw. 8 der Gehäuseteile 2, 4 bis in den Bereich der Durchführung 26 reichen, und zwar im Gehäuseteil 4 bis zum Deckel 36. Weiterhin sind die Auskleidungen 6, 8 jeweils mit Endteilen 38, 40 von der Durchführung 26 bis näherungsweise dem Verbindungsbereich 10 versehen und bevorzugt konisch ausgebildet, wobei die Endteile 38, 40 dicht aneinander liegen und aufgrund der vorgegebenen und bevorzugt konischen Überlappung insbesondere Temperaturänderungen sicher aufnehmen. Aufgrund der somit vorgegebenen metallischen Auflage der Gehäuseteile 2, 4, werden in bevorzugter Weise eine zusätzliche Belastung oder Überlastung und/oder eine unzulässige Verformung der Auskleidung bei der Montage und während des Betriebs, insbesondere durch Rohrkräfte, funktionssicher verhindert. Im Verbindungsbereich 10 enthalten die metallischen Gehäuseteile 2, 4 Zentrierbunde 42, 44 koaxial zur Längsachse 20, so dass eine exakte koaxiale Ausrichtung der Gehäuseteile 2, 4 sowie eine auch hohen Belastungen standhaltende Verbindung sicher gestellt sind. Aufgrund der dicht aneinander liegenden und/oder überlappenden Endteile 38, 40 der Auskleidungen 6, 8 wird auch bei hohen Druckbelastungen und/oder bei Temperaturänderungen eine funktionssichere Kapselung und Abdichtung des Gehäuseinneren nach außen sicher gestellt.

Die Welle 24 enthält im Bereich der Durchführung 26 einen erweiterten Teil 46 mit sphärischer Außenfläche 48 und die Auskleidung 28 der Welle 24 enthält eine korrespondierend ausgebildete sphärische Außenfläche 50. Die Welle 24 besitzt ferner einen Flansch 52, an welchem die Auskleidung 28 endet und abgestützt ist. Die insbesondere aus widerstandsfähigem, hochtemperaturfestem Fluorkunststoff gebildete Auskleidung 28 mit Neigung zum Kaltfluss sowie zur Ausdehnung unter Wärmeeinfluss ist mittels des Flansches 52 funktionssicher abgefangen. Das Dichtelement 34 liegt mit zwei Dichtlippen 54, 56 im Bereich der sphärischen Außenfläche 50 an der Auskleidung 28 dichtend an. Die dem Deckel 36 zugewandte äußere Dichtlippe 56 ist von einem Ringraum 58 umgeben, in welchem ein Ringkörper 60 angeordnet ist. Der Deckel 36 enthält beispielsweise als Schrauben ausgebildete Verstellelemente 62, die auf den Ringkörper 66 derart einwirken, dass die Vorspannung bzw. der Anpressdruck der äußeren Dichtlippe 56 bezüglich der Auskleidung 28 einstellbar ist. Es ist von besonderer Bedeutung, dass die Wellenabdichtung nachstellbar und/oder selbstnachstellend ausgebildet ist.

Ferner ist ein Stützring 64 vorgesehen, welcher den Wellenteil 49 umgibt und in das X-förmig ausgebildete Dichtelement 34 integriert ist. Der Stützring 64 ist im Bereich der radialen Erweiterung der Welle 24 und/oder zwischen der sphärischen Außenfläche 50 der Auskleidung 28 und der Innenfläche der Auskleidung 8 angeordnet und ist als rinförmiger Teil des Dichtelements 34 ausgebildet. Der Stützring 64 weist radial innen eine sphärische Innenfläche 78 auf, welche an die sphärische Außenfläche 50 der Auskleidung 28 angepaßt ist und/oder mit jener korrespondiert. Koaxial zur Drehachse 22 schließen in beiden Richtungen an den integrierten Stützring 64 die innere bzw. äußere Dichtlippe 54, 56 an, deren Innenflächen insbesondere kontinuierlich and die Innenfläche 78 des Stützrings 64 anschließen. Der Stützring 64 weist eine erheblich größere Steifigkeit auf als die Dichtlippen 54, 56 des Dichtelements und ermöglicht somit erfindungsgemäß eine radiale Abstützung der Welle 24. Der ringförmige Teil 64 des Dichtelements 34 bildet den Stützring für die Welle 24 und in Kombination mit der erläuterten sphärischen Außenfläche 50 der Auskleidung 28 der Welle 24 kann somit die Welle 24 Schwenkbewegungen durchführen, wie nachfolgend noch näher erläutert wird. Es sei festgehalten, dass der ringförmige Teil bzw. Stützring 64 die an die sphärische Außenfläche 50 angepasste und/oder mit dieser korrespondierend ausgebildete Innenfläche 78 aufweist.

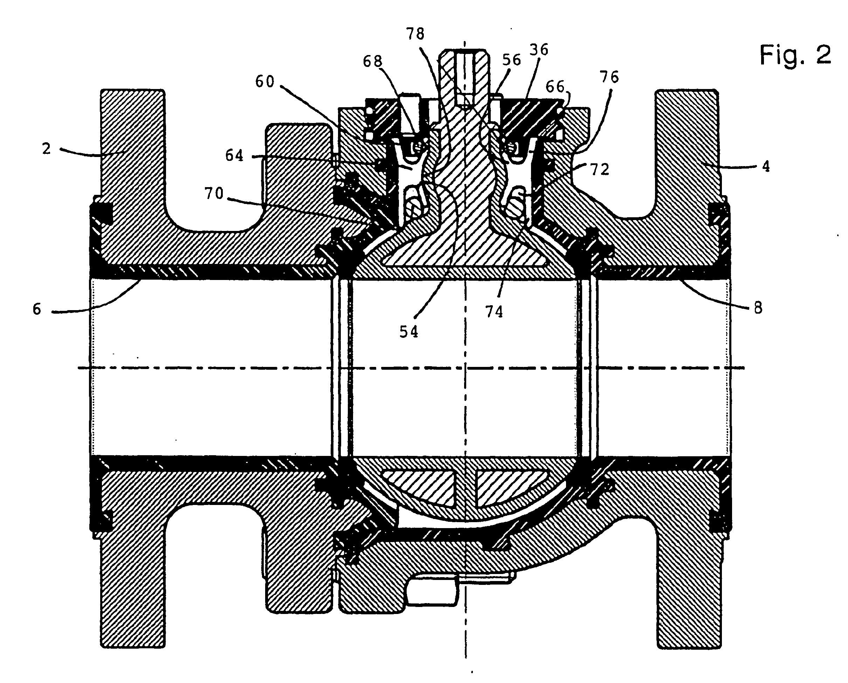

Fig. 2 zeigt ein weiteres Ausführungsbeispiel ähnlich dem gemäß Fig. 1, wobei für übereinstimmende Bauteile obige Ausführungen entsprechend gelten. Der Deckel 36 ist mit einem Dichtring 66 bezüglich dem Gehäuseteil 4 von außen abgedichtet. Mittels des Dichtrings 66 wird insbesondere das Eindringen von Flüssigkeit von außen verhindert und eine Korrosion des Gewindes des Deckels 36 bzw. der Gewindeverbindung des Deckels 36 mit dem Gehäuse 2 und 4 verhindert. Der Ringkörper 60 enthält in einer Nut einen insbesondere elastischen Ring 68 zur Beaufschlagung und Vorspannung der äußeren Dichtlippe 56. Ferner ist die innere Dichtlippe 54 von einem Ringraum 72 umgeben, in welchem ein weiterer, insbesondere elastischer Ring 70 zur Vorspannung und/oder zusätzlichen Abdichtung angeordnet ist. Wie ersichtlich, liegt das Dichtelement 34 mit zwei Armen 74, 76 an der Innenfläche der Auskleidung 6, 8 an. Auch der ringförmige Teil 64 oder Stützring liegt radial außen an der Innenfläche der Auskleidung 8 an und ferner radial innen mit einer sphärischen Innenfläche 78 an der korrespondierend ausgebildeten sphärischen Außenfläche 50 der Auskleidung 28, wodurch eine definierte und/oder funktionssichere Abstützung und/oder Lagerung der Welle 24 im Gehäuse bzw. Gehäuseteil 4 erreicht ist.

Obgleich die integrale Ausbildung des ringförmigen Teils oder Stützrings 64 mit dem Dichtelement 34 sich als besonders zweckmäßig erwiesen hat, kann der Stützring 64 im Rahmen der Erfindung auch unabhängig vom Dichtelement ausgebildet sein, wobei in vorteilhafter Weise unmittelbar an einen solchen separaten Stützring 64 in Richtung der Drehachse 22 nach innen und/oder außen jeweils ein separates Dichtelement, bevorzugt mit Dichtlippen und Armen wie vorstehend erläutert, angeordnet sein kann. Der im Vergleich mit den Dichtlippen eine erheblich größere Steifigkeit aufweisende und in bevorzugter Weise gleichwohl elastische Stützring bildet erfindungsgemäß eine Lagerung des erweiterten Wellenteils 46 mit der bevorzugt sphärischen Außenfläche 48 und/oder der umgebenden Auskleidung 28 mit der sphärischen Außenfläche 50.

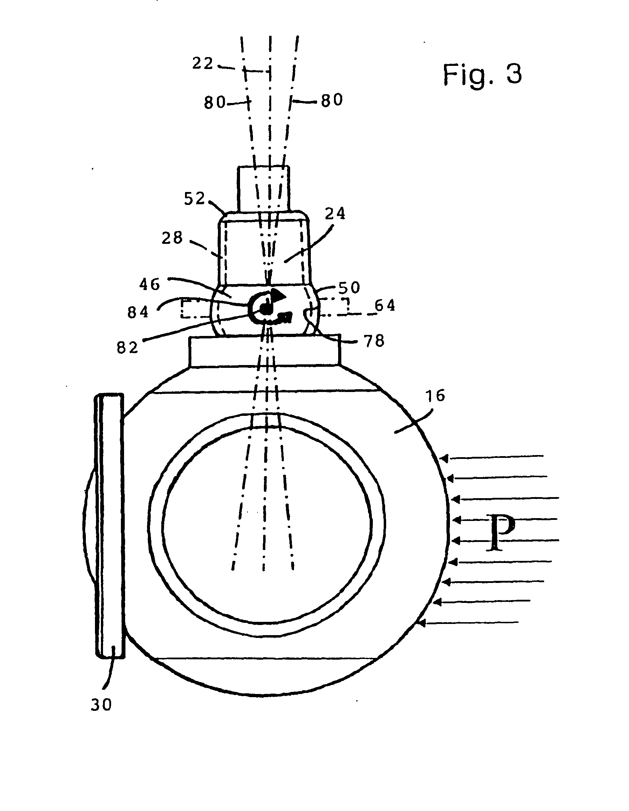

In Fig. 3 sind schematisch der kugelförmige Drehkörper 16 und die mit diesem fest verbundene und bevorzugt einteilig ausgebildete Welle 24 in der Absperrposition des Drehkörpers dargestellt, wobei der Einfachheit halber lediglich die Auskleidung 28 der Welle 24 mit gestrichelten Linien angedeutet ist. Alternativ kann der Stützring 64 mit seiner sphärischen Innenfläche 78 unmittelbar an der sphärischen Außenfläche des Wellenteils 46 anliegen und diesen abstützen. Der Stützring bzw. der ringförmige Teil 64 des Dichtelements im Bereich des erweiterten Teils 46 der Welle 24 liegt an der sphärischen Außenfläche 50 der Auskleidung an, und es sei festgehalten, dass die sphärische Innenfläche 78 des Stützrings 64 korrespondierend zur sphärischen Außenfläche 50 der Auskleidung 28 ausgebildet ist. Weiterhin ist der eine Sitzring 30, welcher in der Auskleidung des gemäß Fig. 1 links dargestellten Gehäuseteils festgelegt ist, dargestellt. Aufgrund des vom Strömungsmedium auf den Drehkörper 16 in der Absperrposition einwirkenden Drucks oder Druckänderungen P wird der Drehkörper 16 verstärkt gegen den Sitzring 30 gedrückt. Aufgrund der Lagerung und/oder Abstützung der Welle mittels des Stützrings 64 kann der Drehkörper 16 gemäß den strichpunktierten Linien 80 Schwenkbewegungen um eine Schwenkachse 82 ausführen, wie mit dem Pfeil 84 angedeutet. Aufgrund der sphärischen Ausbildung der Außenfläche 50 der Auskleidung 28 der Welle 24 verläuft die Schwenkachse 82 im Wesentlichen orthogonal zur Drehachse 22 des Drehkörpers 16. Die Schwenkachse 82 verläuft zumindest näherungsweise durch das Zentrum und/oder den Kugelmittelpunkt der sphärischen und/oder kugelförmigen Außenfläche 50. Ferner umgibt der Stützring 64 erfindungsgemäß den erweiterten Wellenbereich 46 mit einer vorgegebenen axialen Erstreckung, bezogen auf die Drehachse 22, derart, dass die durch das genannte Zentrum verlaufende Schwenkachse 82, in radialer Richtung durch den Stützring 64 verläuft. Somit ist erfindungsgemäß der Drehkörper 16 schwimmend im Gehäuse gelagert, ohne dass hierzu die Welle 24 als separates und Relativbewegungen ermöglichendes Bauteil ausgebildet wäre.

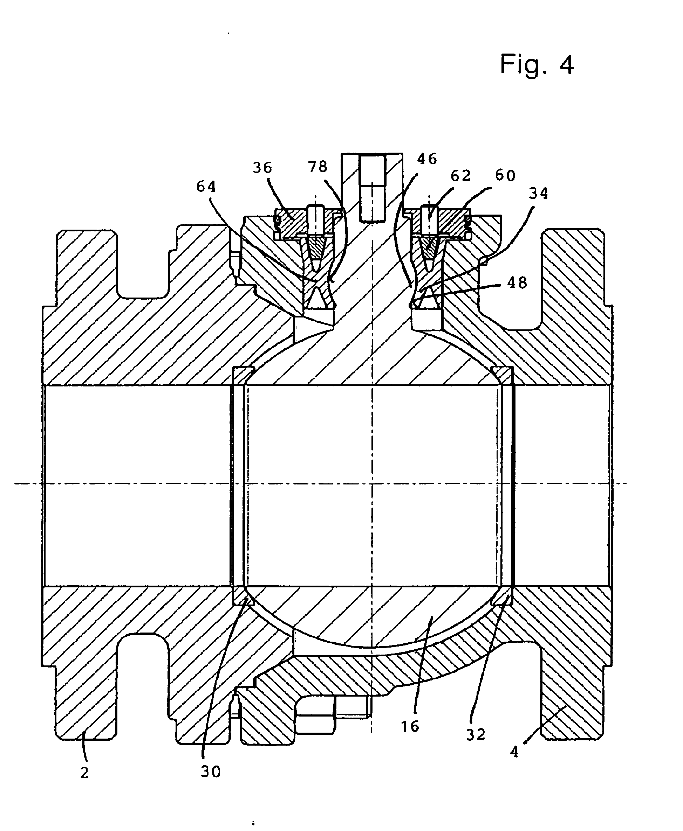

In Fig. 4 ist als Schnitt in einer Axialebene ein Ausführungsbeispiel dargestellt, dessen Gehäuseteile 2, 4 ebenso wie der Drehkörper 16 und die mit diesem verbundene Welle 24 keine Kunststoff-Auskleidungen aufweisen. Die Sitzringe 30, 32 sind unmittelbar in den metallischen Flächen oder Bereichen der Gehäuseteile 2 bzw. 4 festgelegt. Der erweiterte Teil 46 der Welle 24 liegt mit seiner sphärischen Außenfläche 48 unmittelbar am Stützring 64 an. Ferner liegen die innere und die äußere Dichtlippen des Dichtelements 34 unmittelbar an den zugeordneten metallischen Außenflächen der Welle 24 und/oder deren erweitertem Teil 46 an. Mittels des Ringkörpers 60 wird die äußere Dichtlippe des Dichtelements 34 unter einstellbarer Vorspannung an die Außenfläche der Welle 74 gedrückt, wobei bedarfsweise eine Nachstellung der Dichtkraft mit im Deckel 36 angeordneten Verstellelementen 62 ermöglicht wird, welche beispielsweise als Schrauben ausgebildet sind. Im Übrigen gelten die vorangegangenen Ausführungen zu den mit Auskleidungen versehenen Ausführungsbeispielen der Ventile analog für das in Fig. 4 dargestellte Ausführungsbeispiel des Ventils ohne Auskleidungen.

Mittels der Sitzringe 30, 32 werden die im Wesentlichen in Längsrichtung des Ventilgehäuses erfolgenden Mikrobewegungen begrenzt unter Beibehaltung der Dichtwirkung für eine lange Lebensdauer. Die Bewegungen werden mittels der Sitzringe 30, 32 auf ein Minimum reduziert, und infolgedessen sind die in Fig. 3 stark vergrößert dargestellten Schwenkbewegungen der einteilig mit dem Drehkörper 16 verbundenen Welle 24 minimiert. Durch die erfindungsgemäße Kombination der Sitzringe mit der Abstützung der Welle mittels des bevorzugt in das Dichtelement integrierten Stützrings 64 wird eine funktionssichere und eine hohe Standzeit ergebende Abdichtung der Wellendurchführung erreicht. Durch die erfindungsgemäße Kombination einerseits der Sitzringe 30, 32, mit welchen die Auslenkung und/oder Bewegungen des Drehkörpers 16 mit zunehmender Druckbelastung begrenzt und/oder reduziert werden, und andererseits des Stützringes 64 im Bereich der Wellendurchführung werden erfindungsgemäß eine erheblich verbesserte und/oder optimierte Abdichtung und/oder lange Lebensdauer der Wellendurchführung vorgegeben, bei gleichzeitig schwimmender Anordnung des Drehkörpers 16 im Ventilgehäuse 2, 4 und fester Verbindung mit der Welle 24.

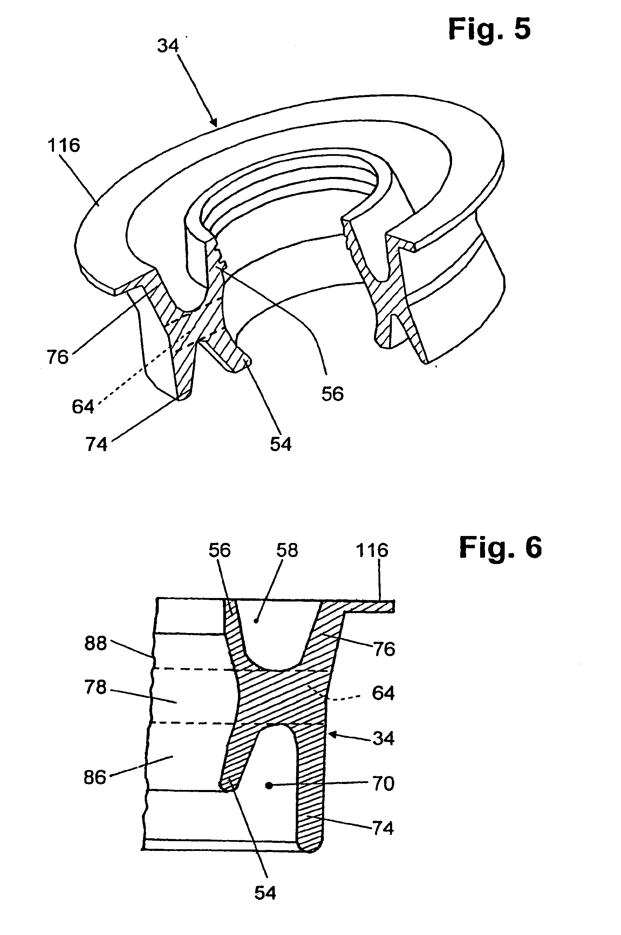

In der perspektivischen und teilweise geschnittenen Darstellung der Fig. 5 ist das ringförmige Dichtelement 34 mit der inneren Dichtlippe 54, der äußeren Dichtlippe 56 sowie dem in radialer Richtung, bezogen auf die Drehachse des Drehkörpers, durchgehenden Stützring 64 gut zu erkennen. Am Ende des äußeren Arms 76 ist ein sich radial erstreckender Flansch 116 integral angeordnet, welcher als Dichtmembrane zwischen dem Gehäuseteil und dem mit diesem verbundenen Deckel zur weiteren Abdichtung nach außen ausgebildet ist. Es sei festgehalten, dass die innere Dichtlippe 54 zur dynamischen Abdichtung der Wellendurchführung bzw. dem Gehäuseinneren vorgesehen und ausgebildet ist, während die äußere Dichtlippe 56 zur äußeren Abdichtung angeordnet und/oder ausgebildet ist. Mit den beiden dynamischen Dichtlippen 54 und 56 wird somit eine funktionssichere und/oder selbstnachstellende Abdichtung der Welle im Bereich der Wellendurchführung erreicht.

Fig. 6 zeigt schematisch das Dichtelement 34 mit der inneren und äußeren Dichtlippe 54, 56, dem integrierten ringförmigen Teil bzw. Stützring 64 sowie dem inneren und äußeren Arm 74, 76. Die innere Dichtlippe 54 und der innere Arm 74 weisen mit den freien Enden in Richtung des Innenraums des Ventilsgehäuses, während die äußere Dichtlippe 56 und der äußere Arm 76 mit den freien Enden nach außen bzw. in Richtung des die Gehäusedurchführung abschließenden Deckels weisen. Die Anlageflächen 86, 88 der Dichtlippen 54, 56 sind grundsätzlich an die sphärische Außenfläche des Auskleidung des erweiterten Wellenteils angepasst und bevorzugt im Bereich ihrer freien Enden zumindest teilweise den axial nach außen bzw. nach innen an den erweiterten Wellenbereich anschließenden im Wesentlichen zylindrischen Wellenbereichen angepaßt. Die innere und ebenso die äußere Dichtlippe 54, 56 liegen mit den Anlageflächen 86, 88 insbesondere mit vorgegebener Vorspannung an den Außenflächen der zugeordneten Wellenbereiche bzw. der auf der Welle vorhandenen Auskleidung an. Insbesondere mittels der anhand der verschiedenen Ausführungsbeispiele erläuterten federelastischen Ringe oder Federelemente ist in vorteilhafter Weise eine selbstnachstellende Wellenabdichtung geschaffen. Zusätzlich oder alternativ wird mittels des anhand von Fig. 1, 4 und 14 erläuterten Ringkörpers und/oder der Verstellelemente die Nachstellung der Dichtkraft bzw. der Wellenabdichtung erfindungsgemäß ermöglicht. Das Dichtelement 34 ist derart ausgebildet und der sphärischen Außenfläche der Auskleidung zugeordnet, dass bei zunehmender Belastung durch Druckkräfte der Anlagebereich vergrößert und/oder infolge einer erhöhten Belastung in Richtung zum Stützring 64 verschoben wird, wobei die Dichtwirkung erhöht wird. Somit wird in bevorzugter Weise eine druckabhängige Veränderung und/oder Erhöhung der Dichtkraft und/oder Vergrößerung des Anlagebereichs erreicht.

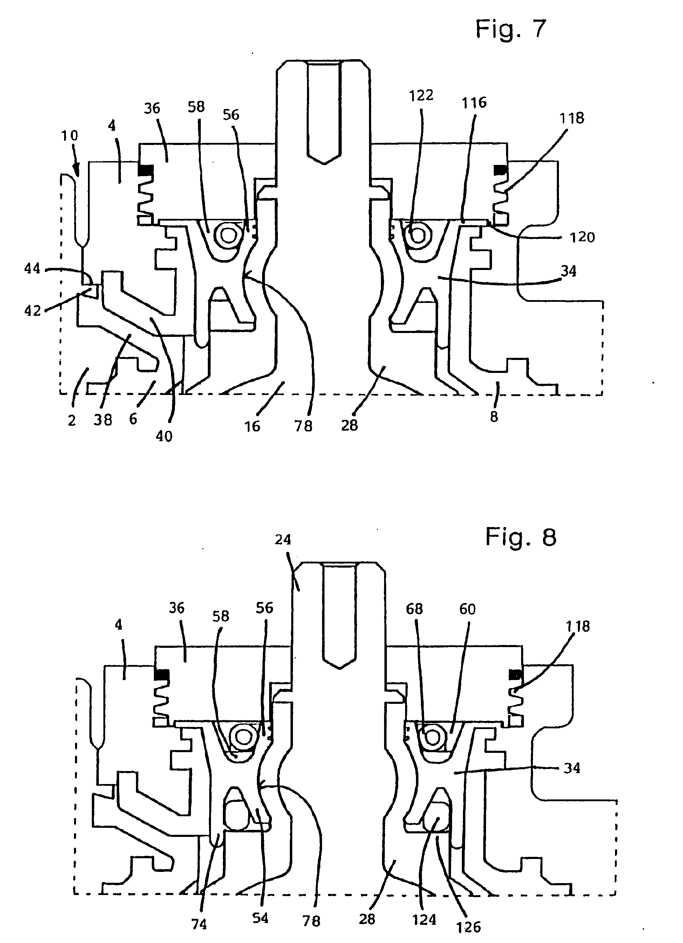

Im Ausführungsbeispiel gemäß Fig. 7 ist der Deckel 36 mittels eines Gewindes 118 in das Gehäuseteil 4 eingeschraubt und liegt mit einem Steg 120 auf dem metallischen Gehäuse 4 auf. Der Flansch bzw. die Membrandichtung 16 des Dichtelements 34 ist zwischen der Unterseite des Deckels 36 und dem Gehäuse 4 eingespannt und übergreift auch das äußere Ende der Auskleidung 8, so dass eine sichere Abdichtung erreicht ist. Die äußere Dichtlippe 56 des Dichtelements 34 ist im Ringraum 58 von einem federelastischen Ring 122 umgeben, welcher die äußere Dichtlippe 56 mit somit vorgegebener Vorspannung an die Auskleidung 28 der Welle 24 drückt. Das Endteil 38 der Auskleidung 6 und das Endteil 40 der Auskleidung 8 sind zum Verbindungsbereich 10 hin unter einem vorgegebenen Winkel, bevorzugt in der Größenordnung von 30° bis 40° zur Gehäuselängsachse konisch angeordnet und liegen überlappend unter Vorspannung dicht aneinander an. Somit wird auch bei hohem Druck im Inneren des Gehäuses und/oder bei hohen Temperaturen und Temperaturänderungen eine funktionssichere Abdichtung erreicht. Bei Temperaturerhöhung wird das innere Endteil 38 verstärkt gegen das äußere Endteil 40 gedrückt, während bei abnehmender Temperatur das äußere Endteil 40 gegen das innere Endteil 38 gedrückt wird. Der Zentrierbund 42 des Gehäuseteils 2 liegt passgenau am Zentrierbund 44 des Gehäuseteils 4 an, wobei ferner im Verbindungsbereich 10 in einer Radialebene, bezogen auf die Gehäuselängsachse, die metallischen Gehäuseteile 2,4 unmittelbar aneinander liegen.

Das in Fig. 8 dargestellte Ausführungsbeispiel entspricht im Wesentlichen dem Ausführungsbeispiel gemäß Fig. 2, wobei im Ringraum 58 der Ringkörper 60 vorgesehen ist, insbesondere zwecks definierter Festlegung des federelastischen Rings 68, welcher die äußere Dichtlippe 56 vorspannt. Ferner ist die untere Dichtlippe 54 von einem bevorzugt ebenfalls federelastischen Ring 124 umgeben. Dieser Ring 124 ist zudem auf einer Ringschulter 126 der Auskleidung 28 abgestützt und ferner am inneren Arm 74 des Dichtelements 34. Der Deckel 36 ist entsprechend Fig. 7 mit dem Gehäuseteil 4 über die Gewindeverbindung 118 verbunden.

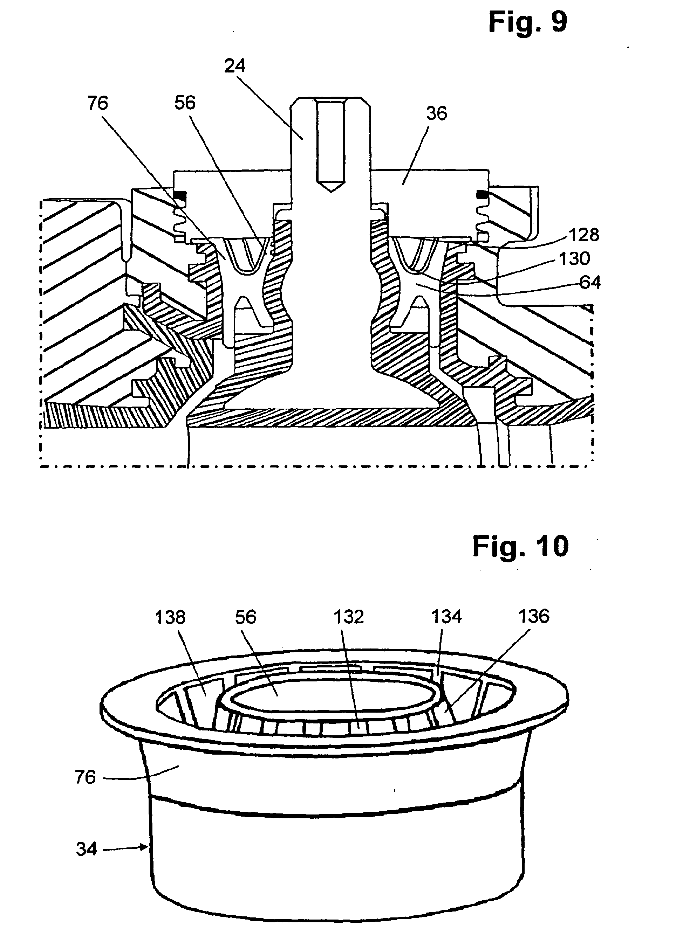

Das in Fig. 9 und 10 dargestellte Ausführungsbeispiel enthält ein die äußere Dichtlippe 56 des Dichtelements 34 umgebendes Federelement 128, welches im Wesentlichen V-förmig ausgebildet ist und zweckmäßig aus Federstahl besteht. Das Federelement 128 liegt einerseits an der äußeren Dichtlippe 56 und andererseits am äußeren Arm 76 des Dichtelements 34 unter Vorspannung an. Des Weiteren liegt das Federelement 128 mit einem gebogenen Verbindungsteil 130 am ringförmigen Teil bzw. Stützring 64, wodurch dieser eine zusätzliche Aussteifung zwecks sicherer Abstützung und/oder Lagerung der Welle 24 erfährt. Der Verbindungsteil 130 ist über den Umfang geschlossen ausgebildet, während die in Richtung zum Deckel 36 im Wesentlichen V-förmig angeordneten Teile des Federelements sektorförmig durch Schlitze 132, 134 in Segmente 136, 138 unterteilt sind, um die erforderliche Anpaßbarkeit und/oder Bewegbarkeit des Dichtelements 34 zu ermöglichen.

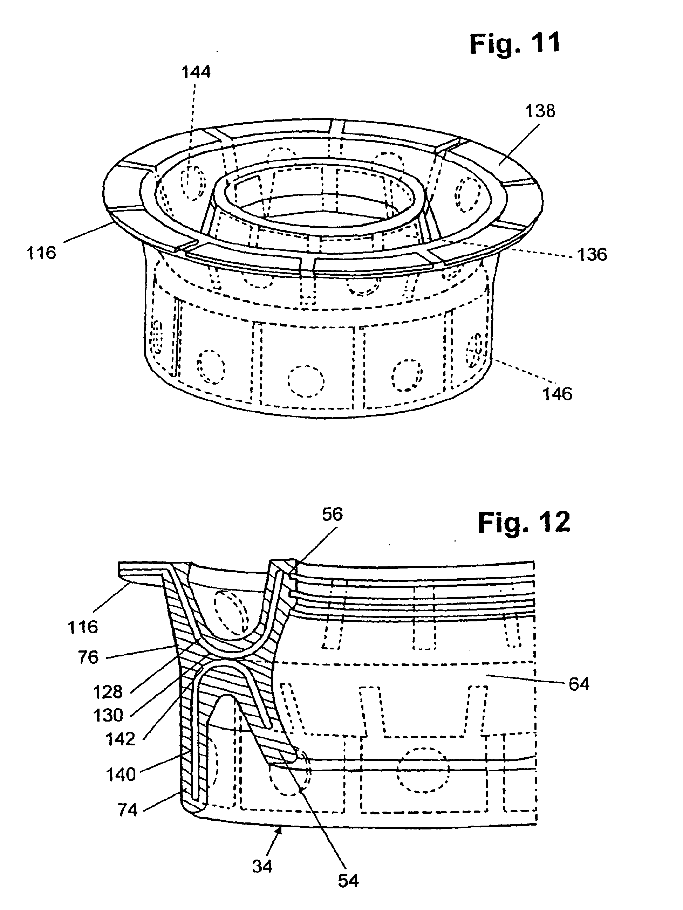

Ein besonderes Ausführungsbeispiel des Dichtelements 34 zeigt Fig. 11 perspektivisch und Fig. 12 vergrößert und teilweise geschnitten. Das Dichtelement 34 enthält ein X-förmiges oder zwei integrierte vom Kunststoff und/oder elastomeren Material des Dichtelements 34 umgebene und/oder in den Kunststoff und/oder das elastomere Material integrierte Federelemente 128, 140, welche wiederum grundsätzlich V-förmig ausgebildet sind. Das in die äußere Dichtlippe 56 integrierte erste Federelement 128 ist im Wesentlichen übereinstimmend, wie in dem vorangegangenen Ausführungsbeispiel, ausgebildet mit dem ringförmigen, über den Umfang geschlossenen Verbindungsteil 130. Der in den äußeren Arm 76 integrierte Teil ist bis zum Flansch 116 radial nach außen verlängert und ist nach außen bzw. gemäß Zeichnung nach oben frei von Kunststoff. Auch ist die erläuterte Unterteilung in Segmente 136, 138 vorgesehen. Das zweite Federelement 140 ist im Wesentlichen korrespondierend ausgebildet, aber vollständig in die innere Dichtlippe 54 und den inneren Arm 74 integriert und folglich von einem Angriff durch das Strömungsmedium geschützt. Auch das zweite Federelement 140 ist im Wesentlichen V-förmig ausgebildet mit einem über den Umfang geschlossenen Verbindungsteil 142, wodurch eine weitere Aussteifung des als Stützring ausgebildeten ringförmigen Teils 64 erreicht ist. Im Übrigen ist auch das zweite Federelement 140 in Segmente unterteilt. Sowohl die Segmente 136, 138 des ersten Federelements 128 als auch die Segmente des zweiten Federelements 140 enthalten Durchbrechungen 144, 146, welche vom Kunststoff des Dichtelements ausgefüllt sind, wodurch insgesamt eine funktionssichere Verbindung der Federelemente 128, 140 mit dem Dichtelement 34 und Integration in diese sichergestellt ist.

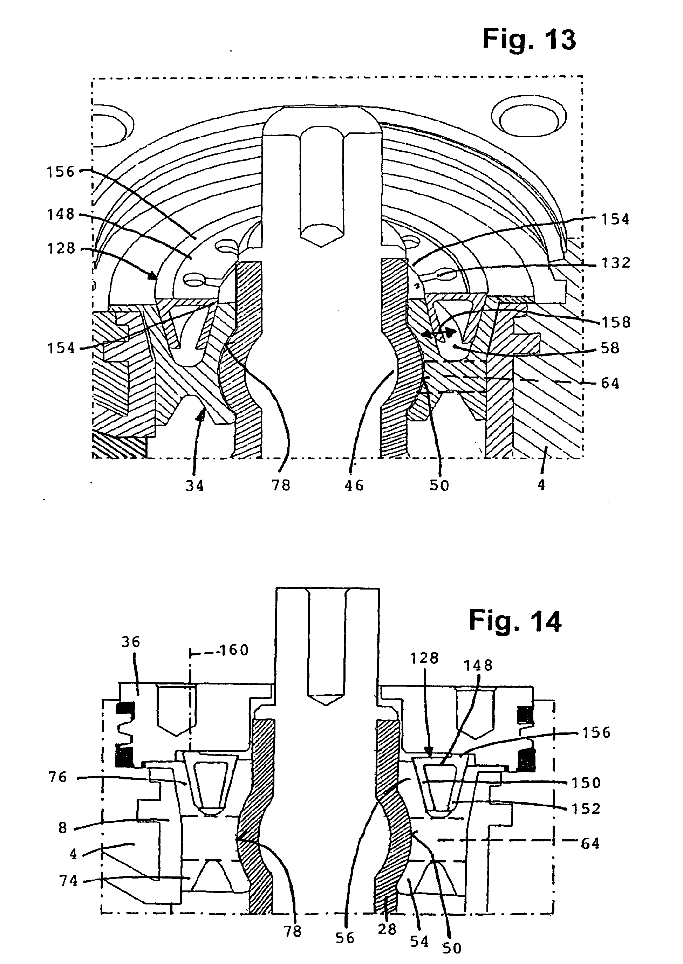

In Fig. 13 und 14 ist eine besondere Ausgestaltung des erfindungsgemäßen Ventils dargestellt, wobei in Fig. 13 der die Durchführung 26 nach außen abschließenden Deckel 36 nicht dargestellt ist. Der in das Dichtelement 34 integrierte Stützring 64 liegt mit seiner sphärischen Innenfläche 78 an der sphärischen Außenfläche 50 an, ebenso wie die innere Dichtlippe 54 und die äußere Dichtlippe 56. Die inneren und die äußeren Arme 74, 76 des X-förmigen Dichtelements und ferner auch der Stützring 64 liegen radial außen an der Auskleidung 8 des Gehäuseteils an und sind somit mittelbar im Gehäuseteil 4 abgestützt. Im Ringraum 58 zwischen der äußeren Dichtlippe 56 und dem äußeren Arm 76 ist das Federelement 128 angeordnet. Das Federelement 128 enthält einen dem Deckel 36 zugewandten ringförmigen Steg 148 und einen radial innen an der äußeren Dichtlippe 56 anliegenden ersten Schenkel 150 sowie einen am äußeren Arm 76 anliegenden zweiten Schenkel 152, welcher über den Umfang bevorzugt geschlossen ausgebildet ist. Der Steg 148 und der erste Schenkel 150 enthalten durchgehende Schlitze 132 derart, dass über den Umfang verteilt eine Anzahl von Feder-Segmenten 154 vorhanden sind. Das ringförmige Federelement 128 ist mittels des Deckels 36 im Ringraum 58 festgelegt, wobei das Federelement 128 radial außen eine Ringschulter 156 aufweist, welche am Deckel 36 abgestützt ist. Mittels des Federelements 128 wird die äußere Dichtlippe 56 mit vorgegebener Federkraft an die sphärische Außenfläche 50 angepreßt, wobei das freie Ende der äußeren Dichtlippe 56 auch an den im Wesentlichen zylindrischen Teil der Auskleidung 28 und somit mittelbar auch der Welle 24 mit vorgegebener Vorspannung angepreßt wird. Aufgrund der Unterteilung des ersten Schenkels 150 in die Feder-Segmente 154 können diese unabhängig voneinander und/oder abhängig vom Schwenkwinkel ausgelenkt werden und/oder die Vorspannung der äußeren Dichtlippe 56 ausüben, wie mit dem Doppelpfeil 158 angedeutet. Des Weiteren wird mit dem Federelement 128, und zwar insbesondere mit dessen ersten Schenkel 150 und/oder der genannten Feder-Segmente 154 eine selbstnachstellende Wellenabdichtung erreicht, so dass trotz Abnutzung oder Verschleiß der Innenfläche der äußeren Dichtlippe 56 und/oder der Auskleidung 28 eine dauerhafte und funktionssichere Abdichtung mittels des Dichtelements 34 sichergestellt ist.

Ferner kann im Rahmen der Erfindung eine Nachstellung der Vorspannung und/oder des Federelements 128 vorgesehen sein. Wie mit gestrichelter Linie 160 angedeutet, sind im Deckel 36, zweckmäßig über den Umfang verteilt, Verstellelemente vorgesehen, wie anhand von Fig. 1 erläutert. Mittels derartiger Verstellelemente, welche mit der Ringschulter 156 des Federelements zusammenwirken bzw. das Federelement abstützen, kann bei Bedarf die mittels des Federelements 128 auf die äußere Dichtlippe 56 einwirkende Vorspannung verändert und insbesondere vergrößert werden. Durch die derart selbstnachstellende und bevorzugt auch nachstellbare Wellenabdichtung werden in bevorzugter Weise lange Standzeiten des Ventils mit minimierten Leckraten sichergestellt.

### Bezugszeichen

- 2, 4: Gehäuseteil
- 6, 8: Auskleidung
- 10: Verbindungsbereich von 2, 4
- 12: Schraube
- 14: Strömungskanal
- 16: Drehkörper
- 18: Durchgangsöffnung in 16
- 20: Längsachse von 2, 4
- 22: Drehachse von 16
- 24: Welle
- 26: Durchführung
- 28: Auskleidung / Umhüllung von 16, 24
- 30, 32: Sitzring
- 34: Dichtelement
- 36: Deckel
- 38: Endteil von 6
- 40: Endteil von 8
- 42: Zentrierbund von 2
- 44: Zentrierbund von 4
- 46: erweiterter Teil von 24
- 48: sphärische Außenfläche von 24 bzw. 46
- 50: sphärische Außenfläche von 28
- 52: Flansch von 24
- 54: innere Dichtlippe von 34
- 56: äußere Dichtlippe von 34
- 58: Ringraum um 56
- 60: Ringkörper in 58
- 62: Verstellelement
- 64: Stützring / ringförmiger Teil von 34
- 66: Dichtring
- 68: federelastischer Ring
- 70: weiterer Ring in 72
- 72: Ringraum um 54
- 74: innerer Arm von 34
- 76: äußerer Arm von 34
- 78: sphärische Innenfläche von 64
- 80: Schwenkbewegung / strichpunktierte Linie
- 82: Schwenkachse
- 84: Pfeil
- 86: Anlagefläche von 54
- 88: Anlagefläche von 56
- 116: Flansch / Membrandichtung an 76
- 118: Gewindeverbindung
- 120: Steg 36
- 122: federelastischer Ring um 56
- 124: federelastischer Ring um 54
- 126: Ringschulter
- 128: erstes Federelement
- 130: Verbindungsteil von 128
- 132, 134: Schlitz in 128
- 136, 138: Segment von 128
- 140: zweites Federelement
- 142: Verbindungsteil von 140
- 144, 146: Durchbrechung in 136, 138
- 148: ringförmiger Steg von 128
- 150: erster Schenkel von 128
- 152: zweiter Schenkel von 128
- 154: Feder-Segment von 128
- 156: Ringschulter
- 158: Doppelpfeil
- 160: gestrichelte Linie

## Patentansprüche

1. Ventil, enthaltend ein Gehäuse (2, 4), einen in diesem drehbar angeordneten, vorzugsweise kugelförmigen, Drehkörper (16) mit einer Durchgangsöffnung (18) für ein Strömungsmedium, wobei entsprechend der Drehwinkelstellung des Drehkörpers (16) um eine Drehachse (22) der Strömungsweg abgesperrt oder zumindest teilweise freigegeben ist, zwei im Gehäuse (2, 4) beabstandet angeordnete Sitzringe (30, 32), welche an der vorzugsweise sphärischen Außenfläche des Drehkörpers (16) dichtend anliegen, und ferner enthaltend eine mit dem Drehkörper (16) in Wirkverbindung stehende Welle (24), welche durch eine Durchführung (26) des Gehäuses nach außen geführt ist, wobei einem Teil (46) der Welle (24) eine sphärische Außenfläche zugeordnet ist, an welcher ein Dichtelement (34) zumindest teilweise anliegt,
wobei
der Drehkörper (16) und die Welle (24) fest miteinander verbunden oder einteilig ausgebildet sind, wobei der Drehkörper (16) gemeinsam mit der Welle (24) um eine der sphärischen Außenfläche (48, 50) zugeordnete Schwenkachse (82), welche im Wesentlichen orthogonal zur Drehachse (22) steht, schwenkbar ist, und
dass das Dichtelement (34) wenigstens eine Dichtlippe (54) und einen Stützring (64) mit einer mit der sphärischen Außenfläche (48, 50) korrespondierenden und an dieser anliegende sphärischen Innenfläche (78) aufweist, auf welchem die Welle (24) über die sphärische Außenfläche (48, 50) abgestützt ist, wobei der Stützring (64) eine wesentlich höhere Steifigkeit aufweist als die wenigstens eine Dichtlippe (54).

2. Ventil nach Anspruch 1, **dadurch gekennzeichnet, dass** der Wellenteil (46) von dem in der Durchführung (26) angeordneten Stützring (64) umgeben ist

3. Ventil nach Anspruch 1 oder 2, **dadurch gekennzeichnet, dass** das Dichtelement (34) X-förmig ausgebildet ist und/oder zwei, bezogen auf die gemeinsame Drehachse (22), beabstandet angeordnete Dichtlippen (54, 56) aufweist und/oder dass die wesentlich höhere Steifigkeit des Stützring in radialer Richtung auftritt.

4. Ventil nach einem der Ansprüche 1 bis 3, **dadurch gekennzeichnet, dass** der Stützring (64) integraler Bestandteil des Dichtelements (34) ist und/oder dass die Außenfläche (48, 50) sowie die Innenfläche (78) des Stützringes (64) Teile von Kugelflächen sind, deren Mittelpunkte oder Zentren im Wesentlichen auf der gemeinsamen Drehachse (22) liegen.

5. Ventil nach einem der Ansprüche 1 bis 4, **dadurch gekennzeichnet, dass** dem Dichtelement (34) und/oder dessen wenigstens einer an der Welle (24) und insbesondere deren sphärischer Außenfläche (48, 50) zugeordneter Dichtlippe (54, 56) ein federelastisches Element (68) oder ein federelastischer Ring (122) oder ein Federelement (128, 140) derart zugeordnet sind, dass eine selbstnachstellende Wellenabdichtung vorhanden ist und/oder eine vorgegebenen und/oder im Wesentlichen gleich bleibende Dichtkraft mittels des Dichtelements (34) und/oder dessen Dichtlippe (54, 56) bezüglich der Welle (24) vorgegeben sind.

6. Ventil nach einem Ansprüche 1 bis 5, **dadurch gekennzeichnet, dass** dem Dichtelement (34) und/oder dessen wenigstens einer Dichtlippe (54, 56) ein Ringkörper (60) und/oder wenigstens ein Verstellelement (62) derart zugeordnet sind, dass die Dichtkraft und/oder die Wellenabdichtung nachstellbar ausgebildet sind.

7. Ventil nach einem der Ansprüche 1 bis 6, **dadurch gekennzeichnet, dass** das Innere des Gehäuses (2, 4) einschließlich der Gehäusedurchführung (26) mit einer Auskleidung (6, 8) aus Kunststoff, insbesondere Fluorkunststoff, ausgekleidet ist und/oder dass die mit dem Drehkörper (16) gemeinsame Auskleidung der Welle (24) ebenso wie die Auskleidung (6, 8) des Gehäuses (2, 4) im Bereich der Durchführung (26) zumindest bis zu einem die Durchführung (26) nach außen abschließenden Deckel (36) reichen.

8. Ventil nach einem der Ansprüche 1 bis 7, **dadurch gekennzeichnet, dass** das Gehäuse zwei Gehäuseteile (2, 4) aufweist, welche in einem Verbindungsbereich (10) miteinander verbunden sind, wobei die Auskleidung (6, 8) mit Endteilen (38, 40) von der Durchführung (26) bis zumindest näherungsweise zum Verbindungsbereich (10) reichen, wobei die Endteile (38, 40) bevorzugt konisch, bezogen auf die Gehäuselängsachse (20) angeordnet sind und/oder dicht, bevorzugt unter Vorspannung, und/oder überlappend aneinander liegen.

9. Ventil nach einem der Ansprüche 1 bis 8, **dadurch gekennzeichnet, dass** das Gehäuse zwei Gehäuseteile (2, 4) aufweist, welche bevorzugt aus Metall bestehen, und dass die Gehäuseteile (2, 4) in einem Verbindungsbereich (10) unmittelbar aneinander liegen und/oder aufeinander, bevorzugt passgenau, abgestimmte Zentrierbunde (42, 44) aufweisen, welche koaxial zur Gehäuselängsachse (20) angeordnet sind.

10. Ventil nach einem der Ansprüche 1 bis 9, **dadurch gekennzeichnet, dass** wenigstens eine der Dichtlippen (54, 56) des Dichtelements (34) mittels eines federelastischen Rings (68, 122, 124) oder eines Federelements (128, 140) bezüglich der Auskleidung (28) der Welle (24) mit vorgegebener Vorspannung angedrückt werden.

11. Ventil nach einem Ansprüche 1 bis 10, **dadurch gekennzeichnet, dass** das Dichtelement (34), bevorzugt dessen äußerer Arm (76), einen im Wesentlichen in radialer Richtung, bezogen auf die Drehachse (22), gerichteten Flansch (116) aufweist, welcher als Membrandichtung zwischen dem Deckel (36) und dem umgebenden Teil des Gehäuses (4) ausgebildet ist.

12. Ventil, insbesondere nach einem der Ansprüche 1 bis 11, **dadurch gekennzeichnet, dass** in der Durchführung (26) des Gehäuses (2, 4) ein Schwenklager mit einer Schwenkachse (82) angeordnet ist, enthaltend einen die Welle (24) umgebenden Stützring (64), welcher einerseits radial außen in der Durchführung (26) abgefangen ist und andererseits radial innen eine sphärische Innenfläche (78) aufweist, und dass die Welle (24) einen Teil (46) mit einer sphärischen Außenfläche (48, 50) aufweist, welche korrespondierend zur genannten Innenfläche (78) ausgebildet ist und an dieser anliegt

## Claims

1. Valve, containing a housing (2, 4), a preferably spherical rotary body (16) rotatably arranged in the same with a through opening (18) for a flow medium, wherein, in accordance with the angle of rotation position of the rotary body (16) about an axis of rotation (22), the flow path is blocked or cleared at least to some extent, two seat rings (30, 32), arranged in a spaced manner in the housing (2, 4), which bear in a sealing manner against the preferably spherical external surface of the rotary body (16), and further containing a shaft (24), which is in operative connection with the rotary body (16) and is guided through a duct (26) of the housing to the outside, wherein a spherical external surface, against which a sealing element (34) bears at least to some extent, is assigned to a part (46) of the shaft (24),
wherein the rotary body (16) and the shaft (24) are constructed such that they are fixedly connected to one another or integrally, wherein the rotary body (16) together with the shaft (24) is pivotable about a pivot axis (82) assigned to the spherical external surface (48, 50), which pivot axis is essentially orthogonal to the axis of rotation (22), and
in that the sealing element (34) has at least one sealing lip (54) and a support ring (64) with a spherical internal surface (78) corresponding to the spherical external surface (48, 50) and bearing against the same, on which support ring the shaft (24) is supported via the spherical external surface (48, 50), wherein the support ring (64) has a substantially higher rigidity than the at least one sealing lip (54).

2. Valve according to Claim 1, **characterised in that** the shaft part (46) is enclosed by the support ring (64) arranged in the duct (26).

3. Valve according to Claim 1 or 2, **characterised in that** the sealing element (34) is constructed in an x-shaped manner and/or has two sealing lips (54, 56) which are arranged in a spaced manner with respect to the common axis of rotation (22) and/or **in that** the considerably higher rigidity of the support ring arises in the radial direction.

4. Valve according to any one of Claims 1 to 3, **characterised in that** the support ring (64) is an integral constituent of the sealing element (34) and/or **in that** the external surface (48, 50) as well as the internal surface (78) of the support ring (64) are parts of sphere surfaces, the centre points or centres of which essentially lie on the common axis of rotation (22).

5. Valve according to any one of Claims 1 to 4, **characterised in that** a spring-elastic element (68) or a spring elastic ring (122) or a spring element (128, 140) are assigned in such a manner to the sealing element (34) and/or its at least one sealing lip (54, 58) assigned to the shaft (24) and in particular its spherical external surface (48, 50) that a self-adjusting shaft seal is present and/or a predetermined and/or essentially constant sealing force are predetermined by means of the sealing element (34) and/or its sealing lip (54, 56) with respect to the shaft (24).

6. Valve according to any one of claims 1 to 5, **characterised in that** an annular body (60) and/or at least one adjusting element (62) are assigned in such a manner to the sealing element (34) and/or its at least one sealing lip (54, 56) that the sealing force and/or the shaft seal are constructed in an adjustable manner.

7. Valve according to any one of Claims 1 to 6, **characterised in that** the interior of the housing (2, 4) including the housing duct (26) is lined with a lining (6, 8) made from plastic, particularly fluoroplastic, and/or **in that** the lining of the shaft (24) common with the rotary body (16) just like the lining (6, 8) of the housing (2, 4) in the region of the duct (26) reaches at least up to a lid (36) outwardly closing the duct (26).

8. Valve according to any one of Claims 1 to 7, **characterised in that** the housing has two housing parts (2, 4) which are connected to one another in a connection region (10), wherein the lining (6, 8) reaches by means of end parts (38, 40) from the duct (26) as far as at least approximately to the connection region (10), wherein the end parts (38, 40) are arranged preferably conically with respect to the housing longitudinal axis (20) and/or lie close to one another, preferably under pre-stress, and/or overlapping one another.

9. Valve according to any one of Claims 1 to 8, **characterised in that** the housing has two housing parts (2, 4) which preferably consist of metal, and **in that** the housing parts (2, 4) lie directly adjacent to one another in a connection region (10) and/or have centring collars (42, 44) adjusted with respect to one another, preferably precisely, which are arranged coaxially to the housing longitudinal axis (20).

10. Valve according to any one of Claims 1 to 9, **characterised in that** at least one of the sealing lips (54, 56) of the sealing element (34) is pressed on with a predetermined pre-stress with respect to the lining (28) of the shaft (24) by means of a spring-elastic ring (68, 122, 124) or a spring element (128, 140).

11. Valve according to any one of Claims 1 to 10, **characterised in that** the sealing element (34), preferably its outer arm (76) has a flange (116) directed essentially in the radial direction with respect to the axis of rotation (22), which flange is constructed as a membrane seal between the lid (36) and the surrounding part of the housing (4).

12. Valve, particularly according to any one of Claims 1 to 11, **characterised in that** a pivot bearing with a pivot axis (82) is arranged in the duct (26) of the housing (2, 4), containing a support ring (64) surrounding the shaft (24), which is held on the one side radially outwardly in the duct (26) and on the other side radially inwardly has a spherical internal surface (78), and **in that** the shaft (24) has a part (46) with a spherical external surface (48, 50) which is constructed correspondingly to the internal surface (78) mentioned and bears against the same.

## Revendications

1. Soupape, contenant un boîtier (2, 4), un corps rotatif (16), disposé de façon rotative dans ce boîtier, de préférence de forme sphérique, avec une ouverture de passage (18) pour un fluide d'écoulement, le chemin d'écoulement étant bloqué ou au moins partiellement libéré en fonction de la position d'angle de rotation du corps rotatif (16) autour d'un axe de rotation (22), deux bagues de siège (30, 32) disposées à distance l'une de l'autre dans le boîtier (2, 4), lesquelles s'appliquent de façon étanche sur la surface extérieure de préférence sphérique du corps rotatif (16), et contenant également un arbre (24) en liaison active avec le corps rotatif (16), lequel est guidé vers l'extérieur par un passage (26) du boîtier, une surface extérieure sphérique, sur laquelle un élément d'étanchéité (34) s'applique au moins partiellement, étant attribuée à une partie (46) de l'arbre (24),
le corps rotatif (16) et l'arbre (24) étant reliés fixement l'un à l'autre ou étant conçus d'un seul tenant, le corps rotatif (16) pouvant pivoter conjointement avec l'arbre (24) autour d'un axe de basculement (82) attribué à la surface extérieure (48, 50) sphérique, lequel axe est sensiblement perpendiculaire à l'axe de rotation (22), et
en ce que l'élément d'étanchéité (34) présente au moins une lèvre d'étanchéité (54) et une bague d'appui (64) avec une surface intérieure (78) sphérique, correspondant à la surface extérieure (48, 50) sphérique et s'appliquant sur celle-ci, élément d'étanchéité sur lequel l'arbre (24) est soutenu au moyen de la surface extérieure (48, 50) sphérique, la bague d'appui (64) présentant une rigidité sensiblement supérieure à la au moins une lèvre d'étanchéité (54).

2. Soupape selon la revendication 1, **caractérisée en ce que** la partie d'arbre (46) est entourée d'une bague d'appui (64) disposée dans le passage (26).

3. Soupape selon la revendication 1 ou 2, **caractérisée en ce que** l'élément d'étanchéité (34) est conçu en forme de X et/ou présente deux lèvres d'étanchéité (54, 56) disposées de façon espacée par rapport à l'axe de rotation (22) commun et/ou **en ce que** la rigidité nettement supérieure de la bague d'appui apparaît dans le sens radial.

4. Soupape selon l'une quelconque des revendications 1 à 3, **caractérisée en ce que** la bague d'appui (64) est un composant intégral de l'élément d'étanchéité (34) et/ou **en ce que** la surface extérieure (48, 50) ainsi que la surface intérieure (78) de la bague d'appui (64) sont des parties de surfaces sphériques, dont les centres se situent essentiellement sur l'axe de rotation (22) commun.

5. Soupape selon l'une quelconque des revendications 1 à 4, **caractérisée en ce qu'**un élément (68) ou une bague (122) à élasticité de ressort ou un élément à ressort (128, 140) sont attribués à l'élément d'étanchéité (34) et/ou à sa au moins une lèvre d'étanchéité (54, 56) disposée sur l'arbre (24) et associée en particulier à sa surface extérieure (48, 50) sphérique, de telle sorte qu'une étanchéité d'arbre à auto-ajustage est présente et/ou une force d'étanchéité prédéfinie et/ou sensiblement uniforme sont prédéfinies au moyen de l'élément d'étanchéité (34) et/ou de sa lèvre d'étanchéité (54, 56) par rapport à l'arbre (24).

6. Soupape selon l'une quelconque des revendications 1 à 5, **caractérisée en ce qu'**un corps annulaire (60) et/ou au moins un élément de réglage (62) sont attribués à l'élément d'étanchéité (34) et/ou au moins une lèvre d'étanchéité (54, 56), de telle sorte que la force d'étanchéité et/ou l'étanchéité d'arbre sont conçues de façon réglable.

7. Soupape selon l'une quelconque des revendications 1 à 6, **caractérisée en ce que** l'intérieur du boîtier (2, 4), y compris le passage de boîtier (26), est conçu avec un revêtement (6, 8) à base de matière synthétique, en particulier de la matière synthétique fluorée, et/ou **en ce que** le revêtement, commun avec le corps rotatif (16), de l'arbre (24) de même que le revêtement (6, 8) du boîtier (2, 4) vont dans la zone du passage (26) au moins jusqu'à un couvercle (36) terminant le passage (26) vers l'extérieur.

8. Soupape selon l'une quelconque des revendications 1 à 7, **caractérisée en ce que** le boîtier présente deux parties de boîtier (2, 4), qui sont reliées l'une à l'autre dans une zone de liaison (10), le revêtement (6, 8) allant avec des parties d'extrémité (38, 40) depuis le passage (26) jusqu'à au moins approximativement la zone de liaison (10), les parties d'extrémité (38, 40) étant disposées de préférence de façon conique, par rapport à l'axe longitudinal du boîtier (20) et/ou s'appliquant l'une contre l'autre de façon étanche, de préférence sous pré-tension, et/ou par chevauchement.

9. Soupape selon l'une quelconque des revendications 1 à 8, **caractérisée en ce que** le boîtier présente deux parties de boîtier (2, 4), qui sont de préférence en métal, et **en ce que** les parties de boîtier (2, 4) s'appliquent directement l'une contre l'autre dans une zone de liaison (10) et/ou présentent des collerettes de centrage (42, 44) adaptées les unes aux autres, de préférence de façon très ajustée, qui sont disposées de façon coaxiale par rapport à l'axe longitudinal du boîtier (20).

10. Soupape selon l'une quelconque des revendications 1 à 9, **caractérisée en ce qu'**au moins l'une des lèvres d'étanchéité (54, 56) de l'élément d'étanchéité (34) est appuyée au moyen d'une bague (68, 122, 124) à élasticité de ressort ou d'un élément à ressort (128, 140) par rapport au revêtement (28) de l'arbre (24) avec une pré-tension prédéterminée.

11. Soupape selon l'une quelconque des revendications 1 à 10, **caractérisée en ce que** l'élément d'étanchéité (34), de préférence son bras (76) extérieur, présente une bride (116) dirigée principalement dans le sens radial par rapport à l'axe de rotation (22), qui est conçue sous forme de joint à membrane entre le couvercle (36) et la partie environnante du boîtier (4).

12. Soupape, en particulier selon l'une quelconque des revendications 1 à 11, **caractérisée en ce que** dans le passage (26) du boîtier (2, 4) est disposé un palier basculant avec un axe de pivotement (82), contenant une bague d'appui (64) entourant l'arbre (24), qui d'une part est réceptionnée radialement à l'extérieur dans le passage (26) et d'autre part présente radialement à l'intérieur une surface intérieure (78) sphérique, et **en ce que** l'arbre (24) présente une partie (46) avec une surface extérieure (48, 50) sphérique, qui est conçue de façon correspondante avec ladite surface intérieure (78) et s'applique sur celle-ci.
